# EUROPÄISCHE PATENTANMELDUNG

(11) **EP 2 336 639 A2**
(43) Veröffentlichungstag der Anmeldung: **22.06.2011**
(21) Anmeldenummer: 10174091.8
(22) Anmeldetag: 26.08.2010
(51) Int. Cl.: F23K 3/02, B65G 53/12, B65G 53/40

(54) **Pelletzuführung**

(30) Priorität: 18.12.2009 DE 102009055000
(71) Anmelder: Lechner, Josef, 86576 Schiltberg (DE)
(72) Erfinder: Lechner, Josef, 86576 Schiltberg (DE)
(74) Vertreter: TBK

(57) **Zusammenfassung**

Eine Pelletzuführung hat einen Behälter, der folgendes aufweist: eine erste Öffnung, die in einem unteren Bereich an einem ersten Wandbereich des Behälters vorgesehen ist, eine zweite Öffnung, die an einem zweiten Wandbereich des Behälters vorgesehen ist, und eine Pelletzuführöffnung, die in einem oberen Bereich des Behälters vorgesehen ist. Über die zweite Öffnung wird Luft in den Behälter angesaugt und über die erste Öffnung wird Luft zusammen mit Pellets abgesaugt. Die Pelletzuführung weist ferner eine Drehwelle auf, die zumindest teilweise in dem Behälter angeordnet ist, durch einen Motor antreibbar ist und mit mindestens einem Auflockerungsbauteil versehen ist, das von der Drehwelle absteht und zumindest einen Bereich in dem Behälter nahe der ersten Öffnung überstreicht.

## Beschreibung

### Bereich der Erfindung

Die vorliegende Erfindung bezieht sich auf eine Pelletzuführung zu einem Pelletofen.

### Technischer Hintergrund

Bisher ist eine Pelletzuführung bekannt, die aus einem entfernten Pelletvorratsbehälter Holzpellets ansaugt und einem Pelletofen zuführt. Holzpellets werden der Heizungsanlage üblicherweise in Sacksilos zur Verfügung gestellt, die einfach an ein entsprechendes Saugrohr zur Zuführung zum Pelletofen angeschlossen werden. Je nach Größe des Saugrohrdurchmessers kann es zu Schwierigkeiten bei der Pelletzufuhr kommen. In einem Sacksilo im Bereich des Zulaufs zu dem Saugrohr kann es dabei zu einem Verkeilen der Holzpellets kommen, wodurch die Zufuhr von Holzpellets zum Erliegen kommt.

Die vorliegende Erfindung wurde gemacht, um das vorangehend beschriebene Problem zu lösen.

### Zusammenfassung der Erfindung

Die Aufgabe der vorliegenden Erfindung ist es eine zuverlässigere Pelletzuführung zu schaffen, bei der ein Verkeilen der Holzpellets weitgehend ausgeschlossen ist. Die Aufgabe wird gelöst durch eine Pelletzuführung gemäß Anspruch 1.

Die erfindungsgemäße Pelletzuführung weist einen Behälter und eine Drehwelle auf. Der Behälter hat eine erste Öffnung, die in einem unteren Bereich an einem ersten Wandbereich des Behälters vorgesehen ist. Eine zweite Öffnung ist an einem zweiten Wandbereich des Behälters vorgesehen. Über eine Pelletzuführöffnung, die in einem oberen Bereich des Behälters vorgesehen ist, werden Pellets dem Behälter zugeführt. Über die zweite Öffnung wird Luft in den Behälter angesaugt und über die erste Öffnung wird Luft zusammen mit Pellets abgesaugt. Die Drehwelle, die zumindest teilweise in dem Behälter angeordnet ist, ist durch einen Motor antreibbar und mit mindestens einem Auflockerungsbauteil versehen. Das mindestens eine Auflockerungsbauteil steht von der Drehwelle ab und überstreicht zumindest einen Bereich in dem Behälter nahe der ersten Öffnung.

Über die Pelletzuführöffnung werden Pellets in den Behälter der Pelletzuführung zugeführt. Die Pellets fallen von oben durch den Behälter und sammeln sich am Boden des Behälters an. Aufgrund ihrer Beschaffenheit neigen die Pellets dazu, sich zu verkeilen. Um die Pellets aufzulockern ist die Drehwelle mit Auflockerungsbauteilen versehen. Dies geschieht dadurch, dass das mindestens eine Auflockerungsbauteil durch die Ansammlung von Pellets am Behälterboden bewegt wird. Die Pellets werden bewegt und dadurch können sie leichter abgesaugt werden.

Die erste Öffnung ist in einem unteren Bereich des Behälters vorgesehen. Die zweite Öffnung kann auf einer im Wesentlichen gegenüberliegenden Seite von der ersten Öffnung vorgesehen sein. Über die zweite Öffnung wird Luft in den Behälter angesaugt und die angesaugte Luft wird zusammen mit Pellets über die erste Öffnung abgesaugt. Des Weiteren kann die Pelletzuführung eine Drehwelle aufweisen, die sich im Wesentlichen horizontal durch den Behälter erstreckt. Die Drehwelle kann sich auch nur teilweise durch den Behälter erstrecken. Sie kann aus einer beliebigen Richtung durch Durchgangslöcher in den Behälter eingeführt sein. Vorteilhaft ist die Drehwelle in der Nähe von entweder der ersten oder der zweiten Öffnung in den Behälter eingeführt.

Um den konstruktiven Aufwand gering zu halten, kann die Drehwelle auch durch eine der beiden Öffnungen führen. Entsprechend kann die geometrische Achse der Drehwelle konzentrisch oder exzentrisch durch eine oder beide von der ersten und der zweiten Öffnung verlaufen. In diesem Fall sind keine zusätzlichen Durchgangslöcher in dem Behälter als Durchgang für die Drehwelle notwendig.

Ist die Drehwelle durch eine der Öffnungen eingesetzt, kann die geometrische Achse der Drehwelle den Behälter in der Nähe der anderen Öffnung schneiden oder durch die andere Öffnung hindurchführen. Die Achse der Drehwelle kann konzentrisch oder exzentrisch durch die eine und/oder die andere Öffnung treten. Ein von dem Motor entferntes Ende der Drehwelle kann in die entsprechende Öffnung eingeführt sein oder innerhalb des Behälters vor der Öffnung enden. Die Drehachse kann auf dieser Seite in einer dafür vorgesehenen Führung in der Öffnung oder in der Nähe der Öffnung geführt sein oder auch ein freies Ende haben.

Um eine kompakte Vorrichtung zu erhalten, besteht auch die Möglichkeit, den Antriebsmotor der Drehwelle in den Behälter zu integrieren. Ferner kann der Motor in die Drehwelle selbst integriert sein.

Vorzugsweise befindet sich die erste Öffnung in einer Seitenwand im unteren Bereich des Behälters. Die zweite Öffnung befindet sich vorteilhaft auf der gegenüberliegenden Seite der ersten Öffnung. Die zweite Öffnung kann etwas höher oder etwas tiefer als die erste Öffnung liegen. Ferner kann die zweite Öffnung in der Umfangsrichtung des Behälters versetzt sein, so dass die erste und die zweite Öffnung hinsichtlich der Mitte des Behälters einen Winkel von kleiner als 180° aufspannen. Vorzugsweise ist der Winkel jedoch in etwa 180°, um eine gute Luftdurchströmung des Behälters zu erreichen. Ein Winkel von 180° soll in diesem Zusammenhang heißen, dass sich die Öffnungen genau gegenüberliegen. Vorzugsweise liegen die erste und die zweite Öffnung einander gegenüber und die Drehwelle ist exzentrisch durch die zweite Öffnung geführt.

Das mindestens eine Auflockerungsbauteil kann sich im Wesentlichen radial von der Drehwelle aus erstrecken, wobei das Auflockerungsbauteil zumindest einen Bereich in dem Behälter in der Nähe der ersten Öffnung überstreicht. Im Wesentlichen radial soll heißen, dass die Richtung, in der sich das Auflockerungsbauteil erstreckt, eine radiale Komponente hat. Mit anderen Worten, diese Erstreckungsrichtung kann axiale und radiale Komponenten haben.

Das mindestens eine Auflockerungsbauteil kann verschiedene Querschnittsformen aufweisen. Der Querschnitt kann rund, polygon oder oval sein. Das Auflockerungsbauteil kann stabartig sein. Es kann einen geraden oder gebogenen Verlauf haben. Der Querschnitt kann konstant sein oder sich verändern. Zum Beispiel kann der Querschnitt in der Nähe der Drehwelle rund sein und sich zum distalen Ende hin verbreitern, um eine größere Auflockerungswirkung zu erzielen.

Eine Vielzahl von Auflockerungsbauteilen kann derart angeordnet sein, dass Pellets zu der ersten Öffnung hin bewegt bzw. befördert werden. Vorteilhaft sind dann die Auflockerungsbauteile schaufelartig ausgebildet. Eine schneckenartige oder spiralförmige Anordnung von einem oder mehreren Auflockerungsbauteilen ist denkbar. Besonders vorteilhaft ist eine Anordnung des mindestens einen Auflockerungsbauteils, in der eine Luftströmung durch den Behälter nur wenig beeinträchtigt wird. Falls das Auflockerungsbauteil schneckenartig ausgebildet ist, kann eine strömungsgünstige Ausführung Öffnungen an dem Auflockerungsbauteil vorsehen. Dadurch kann eine Bewegung der Pellets zu der ersten Öffnung hin sowie eine vorteilhafte Strömungsbeschaffenheit gewährleistet werden.

Der Behälter kann in der Draufsicht eine runde, eine rechteckige oder eine polygone Querschnittsform haben. Der Behälter kann einen ebenen Boden haben. Vorzugsweise ist der Boden des Behälters jedoch so geformt, dass der tiefste Punkt des Behälterbodens in etwa unterhalb der ersten Öffnung bzw. unterhalb der Drehwelle zu liegen kommt. Dadurch wird die Zuführung der Pellets erleichtert.
Der Boden des Behälters weist vorzugsweise senkrecht zur Achse der Drehwelle einen U-förmigen oder V-förmigen bzw. sich nach oben hin öffnenden Querschnitt auf.

Ein Ableitblech kann oberhalb der Drehwelle vorgesehen sein. Das Ableitblech kann einen Querschnitt senkrecht zur geometrischen Achse der Drehwelle in Form eines umgedrehten U oder V aufweisen. Das Ableitblech dient dazu, von oben kommende Pellets zu den Seiten der Drehwelle hin abzulenken und somit eine Leichtgängigkeit der Drehwelle zu gewährleisten. Vorzugsweise hat das Ableitblech in Richtung der geometrischen Achse der Drehwelle nach unten gebogene Seiten. Die von oben kommenden Pellets werden von dem Ableitblech zu den Seiten der Drehwelle hin abgeleitet und fallen auf den Boden des Behälters. Vorzugsweise ist der Behälterboden derart geformt, dass der tiefste Punkt des Behälters in etwa unterhalb der Drehwelle zu liegen kommt. Die von dem Ableitblech herabfallenden Pellets bewegen sich entlang des Behälterbodens zu der Mitte des Behälters hin. Da die Pellets am Boden des Behälters durch die Auflockerungsbauteile aufgelockert werden, können sie leicht von der Luftströmung mitgerissen werden.

Außerhalb des Behälters an der ersten Öffnung kann ein Anschlussrohr angeordnet sein, an dem eine Leitung zu dem Pelletofen angeschlossen ist. Auf der Seite des Ofens kann eine Ansaugvorrichtung montiert sein, die Pellets aus dem Behälter saugt. Die Ansaugvorrichtung erzeugt eine Luftströmung durch den Behälter, indem Luft in die zweite Öffnung gesaugt wird, welche durch den Behälter hindurchtritt, und durch die erste Öffnung aus dem Behälter abgesaugt wird. Vorzugsweise entsteht die Hauptluftströmung in dem Behälter in einem Bereich, der von den Auflockerungsbauteilen überstrichen wird. Die zweite Öffnung dient dazu, das Eintreten von Luft zu ermöglichen. Es kann auch eine Vielzahl von zweiten Öffnungen sein, welche dann entsprechend kleiner sein können. Die Vielzahl von zweiten Öffnungen kann auch über einen größeren Bereich verteilt sein.

Die Luftströmung innerhalb des Behälters kann auch dadurch erzeugt werden, dass auf der Seite der zweiten Öffnung Luft mit Überdruck in den Behälter zugeführt wird. In dem Fall, in dem Luft über die erste und zweite Öffnung angesaugt wird, oder in dem Fall, dass über die zweite Öffnung Luft in den Behälter mit Überdruck zugeführt wird, wird eine Luftströmung durch den Behälter erreicht. Die Luftzuführung kann entweder alleine über die zweite Öffnung erfolgen, oder über eine Vielzahl von zweiten Öffnungen, welche in dem Wandbereich vorgesehen sind, der dem Wandbereich der ersten Öffnung gegenüberliegt.

An der ersten oder der zweiten Öffnung kann eine Vorrichtung vorgesehen sein, die in Abhängigkeit von der Drehung der Drehwelle abwechselnd die erste oder die zweite Öffnung abdeckt und wieder freigibt. Diese Vorrichtung kann zum Beispiel eine Scheibe sein, die an der Drehwelle befestigt ist und einen erheblich größeren Durchmesser als jenen der zweiten Öffnung hat. Diese Scheibe könnte mit einem oder mehreren Löchern versehen sein, die aufgrund der Drehung der Drehwelle und somit der Drehung der Scheibe abwechselnd vor die erste oder zweite Öffnung gelangen.

Vorzugsweise ist die Drehwelle auf der Seite der ersten oder der zweiten Öffnung mit einer Platte versehen, die außerhalb des Behälters exzentrisch an der Drehwelle befestigt ist. Wenn die Drehwelle exzentrisch durch die zweite Öffnung hindurchführt und die Platte exzentrisch an der Drehwelle befestigt ist, kann der folgende Effekt erzielt werden. Durch ein Drehen der Drehwelle wird die exzentrisch an der Drehwelle befestigte Platte abwechselnd vor die Öffnung bewegt und wieder von dieser wegbewegt.

Wenn sich die Platte vor der zweiten Öffnung befindet, wird das Eintreten von Luft in den Behälter erschwert oder verhindert, wodurch ein Unterdruck in dem Behälter entsteht. Bewegt sich die Platte auf einer Kreisbahn von der Öffnung wieder weg, wird durch die eintretende Luft der Unterdruck wieder ausgeglichen. Dadurch entsteht ein Puls, der die Pellets zusätzlich auflockern und mitreißen kann.

In dem Zeitraum, in dem die zweite Öffnung abgedeckt ist, entsteht ein Unterdruck im Behälter. Dieser Unterdruck wird teilweise ausgeglichen, indem Luft über die Pelletzuführöffnung angesaugt wird. Aufgrund dieses Umstands wird die Pelletzufuhr über die Pelletzuführöffnung begünstigt.

Vorzugsweise ist die Platte kreisförmig. Der vorangehend erwähnte Effekt ist besonders ausgeprägt, wenn die Platte unmittelbar vor der zweiten Öffnung vorgesehen ist.

Ist die Platte jedoch vor der ersten Öffnung vorgesehen, erzeugt eine Ansaugvorrichtung in der Pelletzuführleitung zum Ofen abwechselnd einen Unterdruck, der ebenfalls einen Puls im Behälter erzeugt, wenn die Platte wieder wegbewegt wird. Soll eine kompaktere Gesamtanordnung der Pelletzuführung erzielt werden, kann die vorangehend erwähnte Vorrichtung zum Erzeugen eines Pulses auch innerhalb des Behälters vorgesehen werden.

Vorzugsweise sind die erste und die zweite Öffnung kreisförmig ausgebildet. Der vorangehend erwähnte Effekt kann erzeugt werden, wenn der Durchmesser der exzentrisch montierten Platte gleich groß oder größer als der Durchmesser der zweiten Öffnung ist. Je größer der Durchmesser der Platte im Vergleich zum Durchmesser der zweiten Öffnung ist, desto größer wird der Zeitraum, in dem Unterdruck in dem Behälter erzeugt wird und somit wird der Puls der einströmenden Luft nach einem Wegbewegen der Platte von der Öffnung erhöht.

Eine Anordnung der vorangehend erwähnten Vorrichtung zum abwechselnden Abdecken und Freigeben einer Öffnung vor der ersten Öffnung oder vor der zweiten Öffnung bietet gleichermaßen die erfindungsgemäßen Vorteile. Mindestens ein Auflockerungsbauteil verhindert ein Verkeilen der Pellets und erleichtert das Absaugen der Pellets. Die Vorrichtung zum abwechselnden Abdecken und Freigeben einer Öffnung erzeugt wechselnde Druck- und Strömungsverhältnisse in dem Behälter. Zum einen können dadurch Pellets am Boden des Behälters stoßartig abgesaugt werden und zum anderen wird eine Zuführung von Pellets in den Behälter über die Pelletzuführöffnung unterstützt.

Falls die Grundform des Behälters in der Draufsicht rund oder oval ist, wird die zweite Öffnung mit einem Anschlussrohr versehen. Das Anschlussrohr dient dazu, einen ebenen Abschluss vorzusehen, der einen kleinstmöglichen Abstand zu der sich drehenden Platte oder Scheibe ermöglicht. Falls die Grundform des Behälters in der Draufsicht rechteckig ist, kann auf ein solches Anschlussrohr verzichtet werden. Die Platte oder Scheibe kann somit unmittelbar an die Behälterwandlung anschließen. Eine noch kompaktere Bauweise könnte dadurch realisiert werden.

### Kurzbeschreibung der Zeichnungen

Fig. 1 zeigt eine schematische Teilschnittansicht einer Ausführungsform der erfindungsgemäßen Pelletzuführung senkrecht zu einer geometrischen Achse der Drehwelle,
Fig. 2 zeigt eine schematische horizontale Schnittansicht der Ausführungsform der erfindungsgemäßen Pelletzuführung,
Fig. 3 zeigt eine schematische Längsschnittansicht der Ausführungsform der erfindungsgemäßen Pelletzuführung, und
Fig. 4 zeigt eine schematische Schnittansicht der Ausführungsform der erfindungsgemäßen Pelletzuführung.

### Bevorzugte Ausführungsform

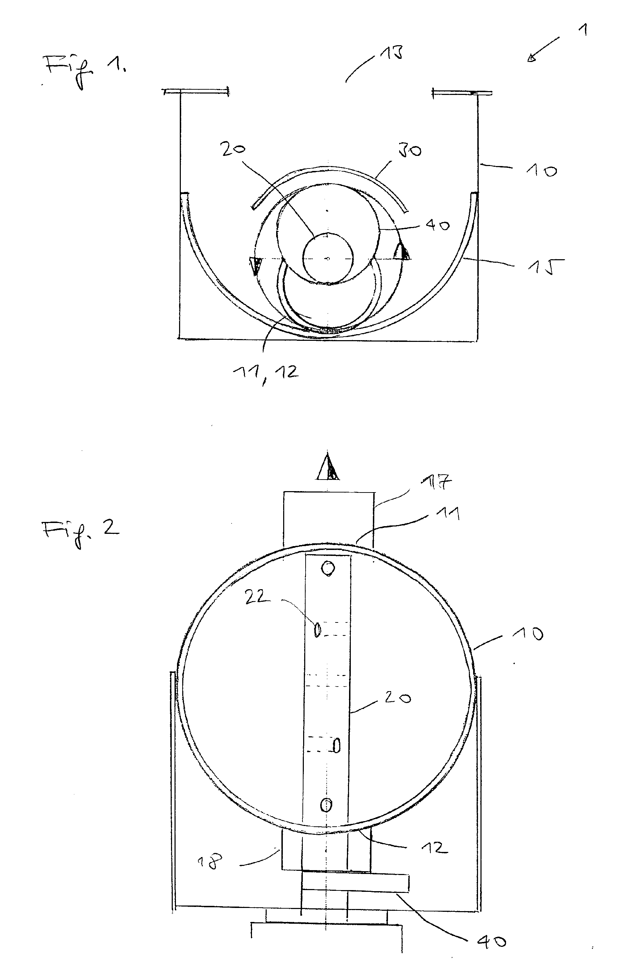

Fig. 1 zeigt eine Teilschnittansicht der Pelletzuführung gemäß dem ersten Ausführungsbeispiel. Fig. 2 ist eine horizontale Schnittansicht der Ausführungsform von Fig. 1. Bezugszeichen 10 bezieht sich auf einen Behälter, der eine runde Grundform aufweist. Der Behälter 10 ist in diesem Ausführungsbeispiel aus mehreren Einzelelementen zusammengesetzt. Diese Einzelbauteile sind zum einen ein zylindrischer Hauptkörper, ein Bodenelement 15 und ein ebenes Deckelelement. In dem ebenen Deckelelement ist die Pelletzuführöffnung 13 ausgebildet. Der Boden 15 des Behälters 10 weist nach oben gebogene Ränder auf. Ferner ist in Fig. 1 zu erkennen, dass sich die erste Öffnung 11 und die zweite Öffnung 12 einander überdecken bzw. direkt einander gegenüberliegend ausgebildet sind. Die erste Öffnung 11 befindet sich unmittelbar oberhalb der untersten Stelle des Bodens 15 des Behälters 10. Dadurch wird ein Totraum in dem Behälter vermieden, in dem Pellets dauerhaft verbleiben.

Eine Drehwelle 20 ist durch die zweite Öffnung 12 geführt, wobei eine geometrische Achse der Drehwelle 20 exzentrisch durch die erste Öffnung 11 bzw. die zweite Öffnung 12 verläuft. Die erste Öffnung 11 und die zweite Öffnung 12 sind jeweils kreisförmig ausgebildet. In der vorliegenden Ausführungsform erstreckt sich die Drehwelle 20 durch die zweite Öffnung 12 hindurch und erstreckt sich bis kurz vor die Behälterwand über der ersten Öffnung 11. Dieses Ende der Drehwelle liegt frei in dem Behälter.

Die erste Öffnung 11 ist mit einem Anschlussrohr 17 versehen und die zweite Öffnung 12 ist mit einem Anschlussrohr 18 versehen. In dem Behälter 10 befindet sich oberhalb der Drehwelle 20 ein Ableitblech 30. Das Ableitblech 30 ist gebogen, so dass die seitlichen Enden des Ableitblechs nach unten zeigen. Ferner ist eine Platte 40 zu sehen, die exzentrisch an der Drehwelle 20 montiert ist. Die Platte dreht sich auf einer Kreisbahn um die Drehwelle 20. Ist die Platte 40 auf ihrer Kreisbahn an dem untersten Punkt angelangt, deckt sie die Öffnung 12 bzw. das Anschlussrohr 18 gänzlich ab.

In Fig. 2 ist die Pelletzuführung in einer Draufsicht zu sehen. Die Drehwelle 20 ist durch die zweite Öffnung 12 und das entsprechende Anschlussrohr 18 in den Behälter 10 eingeführt. Das distale Ende der Drehwelle 20 erreicht in einem zusammengebauten Zustand nicht die erste Öffnung 11. Des Weiteren weist die Drehwelle 20 mehrere Durchgangslöcher 22 auf. Durch diese Durchgangslöcher 22 hindurch werden nach einem Einsetzen der Drehwelle in den Behälter Auslockerungsstäbe 21 montiert.

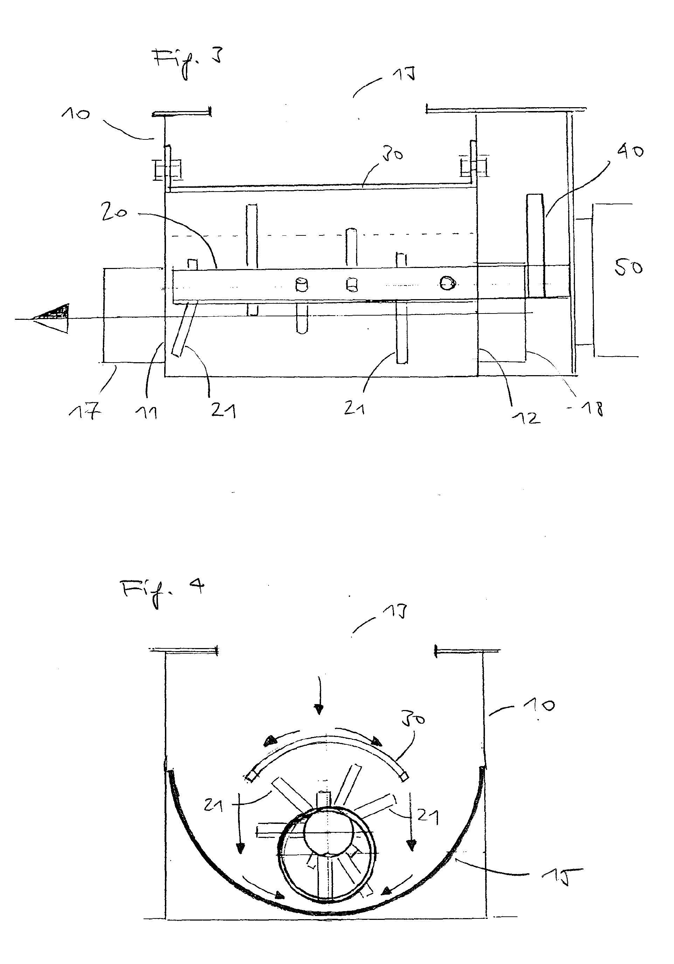

Fig. 3 zeigt die Pelletzuführung gemäß der Ausführungsform in einer Längsschnittansicht. In dem Behälter 10 ist das Ableitblech 30 über Schrauben oder dergleichen an den in axialer Richtung der Drehwelle liegenden Enden mit der Wandlung des Behälters 10 verschraubt. Die Drehwelle 20 ist durch die zweite Öffnung 12 und das Anschlussrohr 18 in den Behälter 10 eingeführt. Die Drehwelle 20 ist mit 6 Auflockerungsbauteilen versehen. Die Auflockerungsbauteile in Fig. 3 sind als Stäbe ausgebildet. Die Auflockerungsstäbe bzw. -bauteile 21 sind hinsichtlich der Achse der Drehwelle in radialer Richtung ausgerichtet. Der erste Auflockerungsstab 21 erstreckt sich im Wesentlichen in radialer Richtung, ist jedoch zusätzlich in axialer Richtung zu der ersten Öffnung 11 hin gebogen.

Die Platte 40 ist in einem geringen Abstand zu dem rechtem Ende des Anschlussrohres 18 vorgesehen, um deren Freigängigkeit zu gewährleisten. Auf der rechten Seite in Fig. 3 ist die Drehwelle an einen Motor 50 angeschlossen.

Fig. 4 zeigt eine Querschnittsansicht der Pelletzuführung gemäß der Ausführungsform. Die Drehwelle 20 ist mit den Auflockerungsstäben 21 versehen, die in verschiedene Richtungen zeigen. Über die Pelletzuführöffnung 13 können Holzpellets von z.B. einem Sacksilo von oben in die Pelletzuführvorrichtung zugeführt werden. Die Pellets fallen durch die Pelletzuführöffnung 13 nach unten auf das Ableitblech 30. Das Ableitblech fängt den Druck der Pellets von dem Sacksilo her ab. Die Pellets bewegen sich in Richtung der Pfeile in Fig. 4 entlang dem äußeren Umfang des Ableitblechs 30. Anschließend fallen die Holzpellets von den seitlichen Rändern des Ableitblechs 30 herab auf den Boden 15 des Behälters 10. Da der Behälterboden 15 einen U-förmigen Querschnitt aufweist, bewegen sich die herabfallenden Pellets weiter nach unten in einen Bereich unterhalb der Drehwelle 20. Die Auflockerungsstäbe 21 der Drehwelle 20 verhindern ein verkeilen der am Boden des Behälters liegenden Holzpellets. Die so aufgelockerten Holzpellets am Boden 15 des Behälters 10 können durch die Luftströmung in dem Behälter 10 leichter abtransportiert werden. Luft wird über das Anschlussrohr 18 durch die Öffnung 12 in das Innere des Behälters 10 angesaugt und durch die erste Öffnung 11 und das Anschlussstück 17 zusammen mit aufgelockerten Pellets abgesaugt.

Die Platte 40, welche an einem Ende der Drehwelle 20 montiert ist, dreht sich mit der Drehwelle. Wenn die Platte 40 auf ihrer Kreisbahn den untersten Punkt erreicht hat, ist die Öffnung 12 gegenüber einströmender Luft abgeschlossen. Somit werden Pellets aus dem Sacksilo (nicht gezeigt) oberhalb der Pelletzuführöffnung 13 angesaugt. Die Pellets fallen dann über das Ableitblech 30 auf den Boden 15 des Behälters 10.

Vorausgesetzt Luft wird konstant über das Anschlussrohr 17 bzw. die erste Öffnung 11 angesaugt, entsteht während der Zeit, in der die Platte 40 die Öffnung 12 abschließt, ein Unterdruck in dem Behälter 10. Dreht sich die Platte 40 weiter auf ihrer Kreisbahn, wird die Öffnung 12 wieder freigegeben und Luft kann ungehindert nachströmen. Um den Unterdruck in dem Behälter 10 auszugleichen, strömt Luft durch die Öffnung 12 schneller nach und ein Puls wird erzeugt. Dieser Puls verstärkt das Auflockern der Holzpellets und deren Abtransport.

## Patentansprüche

1. Pelletzuführung, mit
einem Behälter (10), der folgendes aufweist:
eine erste Öffnung (11), die in einem unteren Bereich an einem ersten Wandbereich des Behälters vorgesehen ist;
eine zweite Öffnung (12), die an einem zweiten Wandbereich des Behälters vorgesehen ist; und
eine Pelletzuführöffnung (13), die in einem oberen Bereich des Behälters vorgesehen ist;
wobei über die zweite Öffnung Luft in den Behälter angesaugt wird und über die erste Öffnung Luft zusammen mit Pellets abgesaugt wird; und
einer Drehwelle (20), die zumindest teilweise in dem Behälter (10) angeordnet ist, durch einen Motor antreibbar ist und mit mindestens einem Auflockerungsbauteil (21) versehen ist, das von der Drehwelle (20) absteht und zumindest einen Bereich in dem Behälter (10) nahe der ersten Öffnung (11) überstreicht.

2. Pelletzuführung nach Anspruch 1, wobei die erste Öffnung (11) der zweiten Öffnung im Wesentlichen gegenüberliegt.

3. Pelletzuführung nach Anspruch 1 oder 2, wobei sich die Drehwelle (20) im Wesentlichen horizontal durch den Behälter (10) erstreckt.

4. Pelletzuführung nach Anspruch 1 bis 3, wobei sich das mindestens eine Auflockerungsbauteil (21) im Wesentlichen radial von der Drehwelle (20) aus erstreckt.

5. Pelletzuführung nach einem der vorangehenden Ansprüche, wobei die geometrische Achse der Drehwelle (20) durch wenigstens eine von der ersten Öffnung (11) und der zweiten Öffnung (12) verläuft.

6. Pelletzuführung nach Anspruch 5, wobei die geometrische Achse der Drehwelle (20) exzentrisch durch wenigstens eine von der ersten Öffnung (11) und der zweiten Öffnung (12) verläuft.

7. Pelletzuführung nach einem der vorangehenden Ansprüche, wobei ein Ableitblech (30) oberhalb der Drehwelle vorgesehen ist.

8. Pelletzuführung nach Anspruch 7, wobei das Ableitblech (30) einen Querschnitt senkrecht zur geometrischen Achse der Drehwelle (20) in Form eines umgedrehten, nach unten offenen U oder V aufweist.

9. Pelletzuführung nach einem der vorangehenden Ansprüche, wobei an der ersten oder der zweiten Öffnung eine Vorrichtung vorgesehen ist, die in Abhängigkeit von der Drehung der Drehwelle (20) abwechselnd die erste oder die zweite Öffnung abdeckt und wieder freigibt.

10. Pelletzuführung nach Anspruch 9, wobei die Vorrichtung eine Platte (40) ist, die exzentrisch an der Drehwelle (20) befestigt ist.

11. Pelletzuführung nach Anspruch 10, wobei die Platte (40) kreisförmig ist.

12. Pelletzuführung nach einem der vorangehenden Ansprüche, wobei die erste Öffnung (11) und/oder die zweite Öffnung (12) kreisförmig sind/ist.

13. Pelletzuführung nach Anspruch 9 bis 12, wobei die Vorrichtung unmittelbar vor der zweiten Öffnung (12) vorgesehen ist.

14. Pelletzuführung nach Anspruch 9 bis 13, wobei der Durchmesser der Platte (40) gleich groß oder größer als der Durchmesser der zweiten Öffnung (12) ist.

15. Pelletzuführung nach einem der Ansprüche 1 bis 10, wobei der Boden (15) des Behälters (10) einen U-förmigen oder V-förmigen Querschnitt senkrecht zur geometrischen Achse der Drehwelle (20) aufweist.
